# EUROPÄISCHE PATENTANMELDUNG

(11) **EP 0 849 330 A2**
(43) Veröffentlichungstag der Anmeldung: **24.06.1998**
(21) Anmeldenummer: 97122139.5
(22) Anmeldetag: 16.12.1997
(51) Int. Cl.: C08L 83/04, C08K 3/36

(54) **Verfahren zur Herstellung von fliessfähigen, hydrophobierte Kieselsäuren enthaltende Siliconkautschuk-Mischungen**

(30) Priorität: 21.12.1996 DE 19653994
(71) Anmelder: Hüls Silicone Gesellschaft mit beschränkter Haftung, D-01610 Nünchritz (DE)
(72) Erfinder: Schöley, Peter, 01612 Nünchritz (DE); Winkler, Ralf, Dr. rer. nat., 01445 Radebeul (DE); Schickmann, Harald, 01662 Meissen (DE)
(74) Vertreter: Zöllner, Gudrun

(57) **Zusammenfassung**

Die Erfindung betrifft ein Verfahren zur Herstellung fließfähiger Siliconkautschuk-Mischungen, welche hydrophobierte Kieselsäuren enthalten, über die Zwischenstufe von Siliconkautschuk-Vormischungen mit einem besonders hohen Kieselsäureanteil. Die erfindungsgemäß hergestellten Mischungen sind in sogenannten RTV2-Systemen, vorrangig als Verguss- und Abformmassen, einsetzbar.

## Beschreibung

Die Erfindung betrifft ein Verfahren zur Herstellung fließfähiger Siliconkautschuk-Mischungen, welche hydrophobierte Kieselsäuren enthalten, über die Zwischenstufe von Siliconkautschuk-Vormischungen mit einem besonders hohen Kieselsäureanteil. Die erfindungsgemäß hergestellten Mischungen sind in sogenannten RTV2-Systemen, vorrangig als Verguss- und Abformmassen, einsetzbar.

Verfahren zur Verteilung von Feststoffen in Flüssigkeiten sind bekannt. Üblicherweise wird der Feststoff mit Hilfe mehr oder Weniger schnell drehender Mischorgane in die Flüssigkeit eingearbeitet und dabei vollständig benetzt. Die erhaltene Mischung aus benetztem Feststoff und Flüssigkeit wird anschließend in einem Mischraum über eine genügend lange Zeit einer mechanischen Beanspruchung unterzogen, um eine möglichst homogene Verteilung des Feststoffes in der Flüssigkeit zu erreichen.

Zur Intensivierung dieser mechanische Beanspruchung wird oft so vorgegangen (Masterbatchverfahren, s. Degussa "Schriftenreihe Pigmente" Nummer 63, 1995), dass die Gesamtmenge eines Feststoffes in zunächst nur eine Teilmenge einer Flüssigkeit eingearbeitet wird. Durch die über einen höheren Feststoffanteil erreichbare höhere Konsistenz der Feststoff-Flüssigkeits-Mischung kann wesentlich effektiver Knet-und/oder Scherenergie durch ein Mischorgan eingetragen werden, da sich der Eintrag von Mischenergie stärker auf Bereiche des Mischgutes in der Nähe des Mischorgans auswirkt. Nach der mechanischen Beanspruchung der Mischung aus Feststoff und Flüssigkeits-Teilmenge erfolgt die Rückverdünnung mit weiterer Flüssigkeit.

Problematisch ist es, nach dem Masterbatch-Verfahren in Flüssigkeiten eine große Menge von Feststoffen einzuarbeiten. Dabei ist es gleichgültig, ob in einem offenen Mischaggregat, wie Zwei-Wellen-Kneter oder Dissolver, oder in einem geschlossenen, wie Stempelkneter oder Pressmixer, oder in einem kontinuierlichen Mischer, beispielsweise in einem Zwei-Schnecken-Extruder, gearbeitet wird. Wenn zuviel Feststoff zugesetzt wird, zerfällt die kompakte Mischung und ist damit nicht weiter verarbeitbar, insbesondere im Falle von Mischungen mit halbaktiven oder aktiven Füllstoffen kommt es zur Krümelbildung.

Die Verteilung von hochdispersen Kieselsäuren als Rheologiehilfsmittel in organischen Polymeren beschreibt ein Prospekt der Wacker-Chemie GmbH ("HDK Das Verdickungsmittel", 1985), der dabei angestrebte Kieselsäuregehalt in der fertigen Formulierung ist jedoch relativ gering.

Bei der Herstellung von Siliconkautschuk-Mischungen ist es zur Verbesserung der mechanischen Festigkeit des vernetzten Elastomeren erforderlich, große Mengen von vor allem aktiven Füllstoffen wie hochdispersen Kieselsäuren in Siliconpolymere einzuarbeiten.

Es ist bekannt, die Einarbeitung von Kieselsäure in Siliconpolymere durch Zusätze von Einarbeitungshilfsmitteln zu beschleunigen. Dazu setzt man bei der Herstellung von kieselsäuregefüllten Siliconkautschuk-Mischungen beispielsweise monomere oder oligomere, in Bezug auf die Kieselsäureoberfläche reaktive Silane, wie Hexamethyldisilazan oder kurzkettige Polydimethylsiloxane mit Hydroxyl-Endgruppen, als Hilfsmittel ein, wobei die Kieselsäureoberfläche gleichzeitig hydrophobiert, d. h. einer chemischen Behandlung unterzogen wird (NOLL "Chemie und Technologie der Silicone" 1968, S. 346). Der Prozeß der in-situ-Hydrophobierung von Kieselsäure mit Hexamethyldisilazan wird seit langem zur Herstellung von bei Raumtemperatur vernetzenden, kieselsäuregefüllten Zweikomponenten-Siliconkautschuken genutzt (s. beispielsweise DE 24 33 697). Trotz des Einsatzes dieser bekannten Hilfsmittel und der Anwendung des sogenannten Masterbatchverfahrens sind einer Steigerung des Kieselsäureanteils in der Mischung und damit der Intensität der Beanspruchung des Mischgutes mit den bisher bekannten Verfahren Grenzen gesetzt.

DE 25 35 334 beschreibt ein Verfahren zur homogenen Verteilung hochdisperser Füllstoffe in Polysiloxanen. Dabei wird der Füllstoff während des Einmischens in das Polymer in-situ-hydrophobiert und die Mischung dann einer mechanischen Behandlung unterzogen. Es wird ein Kieselsäureanteil von ca. 25 Gew.-% erreicht.

Ein extrudierbares Material, bestehend aus Polymer und Füllstoff wird in DE 44 42 871 beschrieben. Dabei werden bis 33 bis etwa 65 Gew.-% Füllstoff mit einem Polymer unter Bedingungen relativ hoher Schereinwirkung kombiniert und anschließend unter Beibehaltung der hohen Scherkräfte vermischt. Bei diesem Verfahren ist der Einsatz hoher Scherwirkung schon während des Einmischens des Füllstoffes in das Polymer und somit ein entsprechend arbeitendes Mischaggregat erforderlich. Dies ist technologisch nur schwer realisierbar, da bereits während der Einarbeitung in die zu diesem Zeitpunkt noch relativ dünnflüssige Mischung hohe Scherkräfte eingetragen werden müssen. Ein effektiver Energieeintrag ist erst in höher gefüllten Mischungen möglich.

Es sind keine Verfahren bekannt, welche die Herstellung fließfähiger, hydrophobierte Kieselsäure enthaltender Siliconkautschuk-Mischungen über die Zwischenstufe des starken mechanischen Beanspruchens sehr hochgefüllter Vormischungen beschreiben.

Der Erfindung lag die Aufgabe zugrunde, fließfähige, hydrophobierte Kieselsäure enthaltende Siliconkautschuk-Mischungen herzustellen, welche sich durch eine verbesserte Fließfähigkeit der unvernetzten Mischungen und sehr gute mechanische Eigenschaften, wie beispielsweise eine höhere Dehnbarkeit und geringere Shore-A-Härte der ausgehärteten Elastomere, auszeichnen.

Gegenstand der Erfindung ist ein Verfahren zur Herstellung fließfähiger, hydrophobierte Kieselsäure enthaltender Siliconkautschuk-Mischungen, dass eine sehr gute Verteilung und Hydrophobierung der Kieselsäure im vorzugsweise linearen Polyorganosiloxan gewährleistet.

Die Erhöhung des Kieselsäureanteils in der Vormischung wird erfindungsgemäß dadurch erreicht, daß ein leichtflüchtiges Siloxan, welche keine hydrolysierbaren Gruppen aufweist, zunächst zur Einarbeitung des Feststoffes in ein Polyorganosiloxan zugegeben und dann anschließend mittels Vakuum und/oder durch erhöhte Temperatur wieder entfernt wird. Dadurch gelingt es, den Kieselsäureanteil in Siliconpolymer-Vormischungen weit über den maximalen Anteil in üblichen Kieselsäure-Polymer-Mischungen zu erhöhen, ohne dass die Mischung zerfällt Die hochgefüllte Vormischung ist nun ausgezeichnet mit weiterem Polyorganosiloxan verdünnbar, wenn dies erfindungsgemäß bei erhöhter Temperatur erfolgt.

Erfindungsgemäß werden in eine Mischung (A) aus
(a) 100 Gew.-Teilen mindestens eines linearen und/oder verzweigten Polyorganosiloxanes, bei welchem bis zu 5 Mol-% der Organoreste vernetzungsfähige Gruppen sind, und
(b) 5 bis 200 Gew.-Teilen, vorzugsweise 20 bis 100 Gew.-Teilen, mindestens einer leichflüchtigen, keine hydrolysierbaren Gruppen aufweisenden, niedermolekularen siliciumorganischen Verbindung
100 bis 400 Gew.-Teile, vorzugsweise 200 bis 300 Gew.-Teile hochdisperser Kieselsäure (B) eingearbeitet, dann wird die Verbindung (b) entfernt, die erhaltene hochgefüllte Mischung mechanisch beansprucht und dann abschießend mit 1 bis 1.000 Gew.-Teilen Polyorganosiloxan (a) bei einer Temperatur oberhalb 100 °C, vorzugsweise 120 bis 150 °C, verdünnt, wobei während der Einarbeitung der Kieselsäure (B) und/oder in der hochgefüllten Vormischung und/oder während und/oder nach der Verdünnung mindestens eine Hydrophobierung mit einer in Bezug auf die eingesetzte Kieselsäure reaktiven siliciumorganischen Verbindung (c) erfolgt.

Als Polyorganosiloxane (a) werden lineare und/oder verzweigte Polyorganosiloxane mit bis zu 5 Mol-% der Organoreste vernetzungsfähige Gruppen eingesetzt, die vorzugsweise mehr als 50 Si-Atome und Viskositäten zwischen 0,1 und 100 Pas aufweisen. Beispiele für vernetzungsfähige Gruppen sind Hydroxy- und/oder Alkoxygruppen in kondensationsvernetzenden Systemen, Dimethylvinylsiloxy- und/oder Hydrogen-Endgruppen und/oder Hydrogen- und/oder Vinyl-Seitengruppen in additionsvernetzenden Systemen. Als weitere nichtvernetzend wirkende Gruppen können unter anderem Methyl-, Phenyl- und/oder Trifluorpropylreste gebunden sein. Als verzweigte Polyorganosiloxane werden flüssige Siloxane eingesetzt, die neben di- und monofunktionellen Siloxy-Einheiten auch tri- und tetrafunktionelle Einheiten aufweisen. Das Verhältnis von tri- und tetrafunktionellen zu monofunktionelle Gruppen wird dabei üblicherweise so gewählt, dass die Polymere Flüssigkeiten darstellen. Sie werden beispielsweise mit dem Ziel, spezielle Fließverhalten in den Siliconkautschuk-Mischungen zu erreichen, verwendet. Es können auch Gemische verschiedener Polyorganosiloxane eingesetzt werden.

Leichtflüchtige, keine hydrolysierbaren Gruppen aufweisende, niedermolekulare siliciumorganische Verbindungen (b) sind solche, die keine SiX-Gruppierungen enthalten bei denen X einen hydrolyisierbaren Rest, wie beispielsweise Hydroxyl-, Alkoxy-, Chlor-, Oxim-, Stickstoff- oder Wasserstoffreste, darstellt, und die in Bezug auf die Oberfläche der Kieselsäure nicht reaktiv sind. Bevorzugt werden Hexaalkyldisiloxan, weitere niedermolekulare Dialkylsiloxane mit bis zu 5 Si-Atomen und/oder ein oder mehrere cyclische Dialkylsiloxane mit 3 bis 6 Siliciumatomen eingesetzt. Vorteilhafterweise und aus Gründen der technischen Verfügbarkeit weisen die eingesetzten Verbindungen als Alkylgruppen Methylgruppen auf.

Als Kieselsäuren können alle bekannten, handelsüblichen pyrogenen und/oder gefällten, hydrophilen und/oder hydrophoben Kieselsäuren verwendet werden, die gegebenenfalls auch Wasser enthalten können. Besonders bevorzugt sind hydrophile pyrogene Kieselsäuren mit einer BET-Oberfläche größer 50 m²/g, deren Oberflächen vorbehandelt sein können.

Die Einarbeitung der Kieselsäure (B) in die Mischung (A) kann beispielsweise diskontinuierlich im Zwei-Wellen-Kneter, Pressmixer oder in anderen bekannten Mischaggregaten erfolgen. Selbstverständlich kann das erfindungsgemäße Verfahren auch in kontinuierlich arbeitenden Mischaggregaten, wie dem Zwei-Schnecken-Extruder durchgeführt werden. Die Einarbeitung kann bei Raumtemperatur oder erhöhter Temperatur und bei Drücken unter oder über dem atmosphärischen Druck erfolgen.

Anschließend wird die Verbindung (b) aus der Vormischung üblicherweise mittels Vakuum und/oder Temperaturerhöhung entfernt.

Die erhaltene hochgefüllte Mischung wird anschließend einer mechanischen Beanspruchung unterzogen, vorzugsweise im gleichen Mischaggregat, in welchen auch das Einmischen der Kieselsäure mittels eines rotierenden Mischorgans erfolgte, beispielsweise dem Zwei-Wellen-Kneter. Die Zeit der Beanspruchung kann von wenigen Minuten bis zu mehreren Stunden dauern und ist ebenso wie die Intensität der Beanspruchung abhängig von der gewünschten Mischungshomogenität sowie der angestrebten Teilchengröße der Kieselsäure. Der erhöhte Kieselsäureanteil ermöglicht dabei einen wesentlich intensiveren Energieeintrag in die Vormischung als es mit den bekannten Verfahren möglich ist. Das hat zur Folge, dass eine wesentlich bessere Verteilung der Kieselsäure im Polyorganosiloxan erzielt werden kann.

Die mechanische Beanspruchung kann über die Drehzahl des Mischorgans gesteuert werden, wobei eine möglichst hohe Drehzahl angestrebt wird. Bedingt durch den hohen Anteil an Kieselsäure in der Vormischung ist es jedoch auch in Mischaggregaten mit langsam drehenden Mischorganen möglich, die gewünschte Knet- und/oder Scherenenergie einzubringen. Wird in einem vollständig gefüllten (totraumfreien) Mischraum gearbeitet, ist es möglich, durch die dabei ausgeübte, intensive mechanische Beanspruchung der hochgefüllten Vormischung mittlere Teilchgrößen der Kieselsäure von kleiner 100 nm, beispielsweise kleiner 50 nm, zu erreichen. Auch eine Beanspruchung unter Druck ist möglich. Günstig ist die Verwendung eines Mischaggregates, welches beheizbar ist, um eventuell während oder nach dem Mischvorgang noch enthaltene leichflüchtige Verbindungen aus der Mischung entfernen zu können.

Die so erhaltene hochgefüllte Vormischung wird anschließend mit mindestens einem Polyorganosiloxan (a) bei einer Temperatur oberhalb 100 °C, vorzugsweise bei einer Temperatur zwischen 120 °C und 150 °C, verdünnt. Diese Verfahrensweise bei erhöhter Temperatur gewährleistet homogene und lagerstabile Mischungen. Das Verdünnen kann in allen dafür bekannten Aggregaten erfolgen, vorzugsweise in dem Mischaggregat, in welchem auch das Einmischen der Kieselsäure und/ oder die mechanische Beanspruchung erfolgte. Der Typ des bzw. der verwendeten Polyorganosiloxane (a) ist abhängig von dem späteren Anwendungszweck der Mischung und beliebig variierbar.

Um abzusichern, dass in der erfindungsgemäßen fließfähigen Siliconkautschuk-Mischung die Kieselsäure vollständig hydrophobiert vorliegt, ist es erforderlich, mindestens eine Hydrophobierung mit 0,1 bis 50 Gew.-Teilen, vorzugsweise 1 bis 10 Gew.-Teilen, mindestens einer zur Oberflächenbehandlung der Kieselsäure geeigneten, reaktiven Verbindung (c) durchzuführen. Die Hydrophobierung kann dabei während der Einarbeitung der Kieselsäure und/oder in der hochgefüllten Vormischung und/oder während und/oder nach der Verdünnung erfolgen. Dabei ist es unerheblich, ob die eingesetzte Kieselsäure schon vorbehandelt wurde. Durch den hohen Anteil an Kieselsäure in der Vormischung kann es durch den Energieeintrag während der mechanischen Beanspruchung zur Freilegung von Kieselsäureoberflächen kommen, welche noch nicht chemisch behandelt wurden. Deswegen ist es günstig, eine Hydrophobierung nach der mechanischen Beanspruchung durchzuführen. Die Hydrophobierung kann ein- oder mehrmalig in allen Stufen während des gesamten Herstellungsprozesses durchgeführt werden.

Als in Bezug auf die Oberfläche der eingesetzte Kieselsäure reaktive siliciumorganische Verbindung (c) werden bevorzugt Verbindungen mit 1 bis 2 Si-Atomen verwendet, beispielsweise Silazane, wie Hexamethyldisilazan, oder Trialkylsilanole, beispielsweise Trimethylsilanol. Bei Verwendung von Silazanen ist es üblich, in Gegenwart von Wasser zu arbeiten, falls die der Kieselsäure anhaftende Feuchtigkeit nicht ausreichend ist. Bei Einsatz von Silanolen ist es günstig, Silazane oder ein NH₃-Wasser-Gemisch zuzusetzen. Weiterhin können als reaktive Verbindungen kurzkettige Siloxane mit bis zu 10 Si-Atomen und Alkoxy-, Acetoxy-, Chlor- und/oder Hydroxygruppen verwendet werden. Es ist vorteilhaft, allgemein üblich und für die Qualität der Endprodukte von Bedeutung, während der Hydrophobierung gebildete, leichflüchtige Verbindungen zu entfernen, das kann gemeinsam mit der Verbindung (b) nach der Einarbeitung der Kieselsäure aus der Vormischung erfolgen oder auch in einem späteren Schritt.

Die nach der erfindungsgemäßen Verfahrensweise erhaltenen Mischungen können in Abhängigkeit vom späteren Anwendungszweck entweder mit Polyorganosiloxanen weiter verdünnt und/oder als Siliconkautschuk-Mischung gelagert oder gegebenenfalls nach Zusatz weiterer üblicher Mischungsbestandteile, wie Vernetzer, Weichmacher, Katalysatoren, Haftvermittler, Pigmenten, verstärkend wirkenden Verbindungen, wie MQ-Siliconharzen, sowie weiteren aktiven oder inaktiven Füllstoffen, zum fertig ausgehärteten Elastomer verarbeitet werden.

Die erfindungsgemäß hergestellten, fließfähigen, hydrophobierte Kieselsäuren enthaltende Siliconkautschuk-Mischungen haben gegenüber den herkömmlichen Mischungen den großen Vorteil, dass sie außerordentlich lagerstabil, d. h. ihre Viskosität über mehrere Monate beibehalten, und auch als hochgefüllte Mischungen mit einer guten Fließfähigkeit herstellbar sind. Weiterhin sind sie unter Beibehaltung von guten mechanischen Elastomer-Kennwerten wesentlich niedrigviskoser als herkömmlich hergestellte Mischungen. Die erfindungsgemäß hergestellten Vormischungen sind mit Erfolg in fließfähigen Siliconkautschuk-Mischungen einsetzbar.

### Ausführungsbeispiele

Alle Viskositätsangaben beziehen sich auf 25°C.

### Beispiel 1

In einem 0,5 l fassenden Zwei-Wellen-Kneter wurden 90 g einer nicht vorbehandelten, pyrogenen Kieselsäure mit einer Oberfläche von 200 m²/g in ein Gemisch aus 120 g eines hydroxyterminierten Polydimethylsiloxans einer Viskosität von 5 Pas, 15 g Hexamethyldisiloxan, 24 g Hexamethyldisilazan und 6 g Wasser eingearbeitet. Diese Mischung wurde 1 Stunde bei 130 °C geknetet. Anschließend erfolgte im Vakuum ein Aufheizen auf 160 °C, wobei Hexamethyldisiloxan und gebildete, leicht flüchtige Verbindungen entfernt wurden. Die so erhaltene hochgefüllte Siliconkautschuk-Vormischung wurde bei Temperaturen zwischen 130 und 160°C eine weitere Stunde geknetet. Anschließend wurde mit 120 g des hydroxyterminierten Polydimethylsiloxans und 60 g eines trimethylsiloxyterminierten Polydimethylsiloxans einer Viskosität von 0,1 Pas bei einer Temperatur von 160 bis 130 °C rückverdünnt. Die Viskosität der erhaltenen Mischung betrug 34 Pas.

100 g der hergestellten Mischung wurden mit 5 g einer Vernetzerflüssigkeit, welche aus 60 Gew.-Teilen Tetraethoxysilan, 35 Gew.-Teilen Methyltriethoxysilan und 5 Gew.-Teilen Dibuthylzinndilaurat bestand, 7 Tage bei Raumtemperatur ausgehärtet. Das ausgehärtete Elastomer wies eine Härte von 31 Shore A und eine Weiterreißfestigkeit von 25 N/mm auf.

### Beispiel 2

Beispiel 1 wurde wiederholt mit der Abänderung, dass nach dem zweiten Kneten 24 g Hexamethyldisilazan und 6 g Wasser eingearbeitet wurden. Danach wurde 1 h bei 130 °C geknetet und anschließend bei 160 °C ein zweites Mal entflüchtigt. Die Rückverdünnung erfolgte analog Beispiel 1.

Die Viskosität der verdünnten Mischung betrug 27 Pas. Das mit der Vernetzerflüssigkeit ausgehärtete Material wies eine Härte von 28 Shore A und eine Weiterreißfestigkeit von 24 N/mm auf.

### Beispiel 3

Beispiel 1 wurde wiederholt mit der Abänderung, dass nach dem Rückverdünnen 24 g Hexamethyldisilazan und 6 g Wasser eingearbeitet wurden. Danach wurde 1 h bei 130 °C geschert und anschließend bei 160 °C ein zweites Mal entflüchtigt.

Die Viskosität der verdünnten Mischung betrug 29 Pas. Das mit der Vernetzerflüssigkeit ausgehärtete Material wies eine Härte von 28 Shore A und eine Weiterreißfestigkeit von 22 N/mm auf.

### Beispiel 4

Beispiel 1 wurde wiederholt mit der Abänderung, dass die Kieselsäure in ein Gemisch aus 65 g eines dimethylvinylsiloxylterminierten Polydimethylsiloxanes einer Viskosität von 6 Pas, 45 g Hexamethyldisiloxan eingearbeitet und die Mischung 1 Stunde bei 130°C geknetet wurde. Die so erhaltene Mischung wurde nach dem zweiten Kneten mit 24 g Hexamethyldisilazan und 6 g Wasser versetzt, 1h bei 130 °C geknetet und 1h bei 160 °C entflüchtigt. Die erhaltene Mischung wurde mit 145 g dimethylvinylsiloxylterminiertem Polydimethylsiloxan einer Viskosität von 6 Pas bei einer Temperatur von 160 bis 130 °C rückverdünnt. Die Viskosität der erhaltenen Mischung betrug 150 Pas.

90 g der Mischung wurden mit einer Vernetzerkomponente, bestehend aus 6,9 g dimethylvinylsiloxylterminiertem Polydimethylsiloxan einer Viskosität von 6 Pas, 0,3 g eines 1 %igem Pt-Katalysators und 2,8 g dimethylhydrogensiloxylterminiertem Polydimethylsiloxan mit einem H-Si Gehalt von 4,0 mmol/g, während 30 min bei 150 °C ausgehärtet. Das ausgehärtete Material wies eine Härte von 24 Shore A und eine Weiterreißfestigkeit von 24 N/mm auf.

## Patentansprüche

1. Verfahren zur Herstellung von fließfähigen, hydrophobierte Kieselsäuren enthaltende Siliconkautschuk-Mischungen, dadurch gekennzeichnet, dass in eine Mischung (A) aus
(a) 100 Gew.-Teilen mindestens eines linearen und/oder verzweigten Polyorganosiloxanes, bei welchem bis zu 5 % der Organoreste reaktive, vernetzungsfähige Gruppen sind, und
(b) 5 bis 200 Gew.-Teile mindestens einer leichflüchtigen, keine hydrolisierbaren Gruppen aufweisenden, niedermolekularen siliciumorganischen Verbindung,
100 bis 400 Gew.-Teile hochdisperse Kieselsäure (B) eingearbeitet,
dann die Verbindung (b) entfernt wird, die erhaltene hochgefüllte Vormischung intensiv mechanisch beanspucht, dann abschließend mit 1 bis 1.000 Gew.-Teilen Polyorganosiloxan (a) bei einer Temperatur oberhalb 100 °C verdünnt wird,
wobei während der Einarbeitung der Kieselsäure (B) und/oder in der hochgefüllten Vormischung und/oder während und/oder nach der Verdünnung mindestens eine Hydrophobierung mit 0,1 bis 50 Gew.-Teilen einer in Bezug aufdie eingesetzte Kieselsäure reaktiven siliciumorganischen Verbindung (c) erfolgt.

2. Verfahren nach Anspruch 1, dadurch gekennzeichnet, dass das Polyorganosiloxan (a) eine Molmasse von mindestens 1.000 aufweist.

3. Verfahren nach Anspruch 1, dadurch gekennzeichnet, dass das Polyorganosiloxan (a) Dimethylhydroxysiloxy-, Trimethylsiloxy- und/oder Dimethylvinylsiloxy-Endgruppen aufweist.

4. Verfahren nach Anspruch 1, dadurch gekennzeichnet, dass die leichtflüchtige, keine hydrolysierbaren Gruppen aufweisende, niedermolekulare siliciumorganische Verbindung (b) Hexaalkyldisiloxan und/oder Octaalkyltrisiloxan ist.

5. Verfahren nach Anspruch 1, dadurch gekennzeichnet dass die leichtflüchtige, keine hydrolysierbaren Gruppen aufweisende, niedermolekulare siliciumorganische Verbindung (b) ein oder mehrere cyclische Dialkylsiloxane mit 3 bis 6 Siliciumatomen darstellt.

6. Verfahren nach Anspruch 1, dadurch gekennzeichnet, dass als hochdisperse Kieselsäure (B) hydrophobe und/oder hydrophile, pyrogene und/oder gefällte Kieselsäure mit einer BET-Oberfläche größer 50 m²/g verwendet wird.

7. Verfahren nach Anspruch 1, dadurch gekennzeichnet, dass als in Bezug auf die Kieselsäure reaktive Verbindung Disilazane oder Trialkylsilanole zugesetzt werden.

8. Verfahren nach Anspruch 1, dadurch gekennzeichnet, dass die hoch gefüllte Vormischung bei einer Temperatur im Bereich von 120°C bis 150 °C verdünnt wird.
